(19) Europäisches Patentamt
European Patent Office
Office européen des brevets

(11) **EP 2 019 086 A1**

(12) **EUROPEAN PATENT APPLICATION**
published in accordance with Art. 153(4) EPC

(43) Date of publication:
**28.01.2009 Bulletin 2009/05**

(51) Int Cl.:
*C03B 37/027* (2006.01)  *C03B 37/012* (2006.01)
*C03C 13/04* (2006.01)  *G02B 6/00* (2006.01)
*G02B 6/032* (2006.01)

(21) Application number: **07743129.4**

(22) Date of filing: **10.05.2007**

(86) International application number:
**PCT/JP2007/059694**

(87) International publication number:
**WO 2007/132744 (22.11.2007 Gazette 2007/47)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **17.05.2006 JP 2006137914**

(71) Applicant: **Asahi Glass Company, Limited**
**Chiyoda-ku**
**Tokyo 100-8405 (JP)**

(72) Inventors:
- **NAGASHIMA, Tatsuo**
  **Chiyoda-ku, Tokyo 1008405 (JP)**
- **HASEGAWA, Tomoharu**
  **Chiyoda-ku, Tokyo 100-8405 (JP)**
- **OHARA, Seiki**
  **Chiyoda-ku, Tokyo 100-8405 (JP)**
- **SUGIMOTO, Naoki**
  **Chiyoda-ku, Tokyo 100-8405 (JP)**

(74) Representative: **Müller-Boré & Partner**
**Patentanwälte**
**Grafinger Strasse 2**
**81671 München (DE)**

(54) **METHOD FOR MANUFACTURING OPTICAL FIBER**

(57)    To provide a process for producing an air cladding type optical fiber by a method other than extrusion molding.

A process for producing an optical fiber comprising a hollow glass fiber with an optical transmission glass held to extend in its axial direction at its center, which process comprises a step of heating and drawing a glass rod having three or more holes with an equal diameter provided around its center axis to extend in its axial direction where the distance between each hole and the axis is mutually equal and the distance between adjacent holes is mutually equal, and a portion surrounded by such holes will constitute said optical transmission glass, while applying pressure to expand the holes with one end of the rod closed, to form a preform wherein glass between the holes is in a plate form, and subjecting the preform to wire drawing to form an optical fiber in which said optical transmission glass is held by plate glass.

Fig. 2

**Description**

TECHNICAL FIELD

The present invention relates to a process for producing an optical fiber comprising a hollow glass fiber and an optical transmission glass held to extend in its axial direction at the center of its hollow portion.

BACKGROUND ART

An anomalously dispersive high nonlinearity lead silicate holey fiber is disclosed which has Soliton-self-frequency-shift effects and which is capable of pulse compression (Non-Patent Document 1).
It is reported that this holey fiber is an optical fiber wherein an optical transmission glass (diameter: about 1.7 $\mu$m) extending in an axial direction at the center of a hollow portion of a hollow glass fiber, is held by three plate glasses (diametrical length: about 5.5 $\mu$m, thickness: at most 250 nm), and it is prepared by extrusion molding and has a nonlinear coefficient of 640 $W^{-1}km^{-1}$ at a wavelength of 1,550 nm. Further, the hollow portion is partitioned by the above three plate glasses, and the diameter of the hollow portion is about 12.7 $\mu$m (=1.7 $\mu$m + 5.5 $\mu$m $\times$ 2).
Non-Patent Document 1: P. Petropoulos et al, 'Soliton-self-frequency-shift effects and pulse compression in an anomalously dispersive high nonlinearity lead silicate holey fiber', OFC2003, 2003, PD3

DISCLOSURE OF THE INVENTION

PROBLEMS TO BE SOLVED BY THE INVENTION

The optical fiber disclosed in Non-Patent Document 1 is one wherein at the center of a hollow glass fiber, an optical transmission glass extending in its axial direction is held by plate glasses (such an optical fiber may hereinafter be referred to as an air cladding-type optical fiber), and one having a large nonlinear coefficient may be obtained.
However, there have been such problems that when it is attempted to prepare an air cladding-type optical fiber by extrusion, the glass tends to be crystallized during the molding; the mold is in contact with the surface of glass to form a hole, whereby the surface is likely to be scratched or the glass at such a surface portion is likely to be reduced, and consequently, the transmission loss increases or the strength of the optical fiber decreases; and in the obtained optical fiber, it is difficult to increase the proportion of a portion having a structure as designed.
It is an object of the present invention to provide a process for producing an air cladding-type optical fiber by a method other than extrusion molding.

MEANS TO SOLVE THE PROBLEMS

The present invention provides a process for producing an optical fiber comprising a hollow glass fiber with an optical transmission glass which is extended in its axial direction at its center, which process comprises a step of heating and drawing a glass rod having three or more holes with an equal diameter provided around its center axis to extend in its axial direction where the distance between each hole and the axis is mutually equal and the distance between adjacent holes is mutually equal, and a portion surrounded by such holes will constitute said optical transmission glass, while applying pressure to expand the holes with one end of the rod closed, to form a preform wherein glass between the holes is in a plate form, and subjecting the preform to wire drawing to form an optical fiber in which said optical transmission glass is held by plate glass.

EFFECTS OF THE INVENTION

According to the present invention, it is possible to produce an air cladding-type optical fiber without using extrusion molding.

BRIEF DESCRIPTION OF DRAWINGS

Fig. 1 is a plan view and a side view of a glass rod.
Fig. 2 is a schematic view for illustrating the step of heating and drawing the glass rod while applying pressure to expand the six holes with one end of the glass rod closed.
Fig. 3 is a schematic view of a cross section of one example of an air cladding-type optical fiber.

Fig. 4 is a SEM photograph of a cross section of an air cladding-type optical fiber.

MEANINGS OF SYMBOLS

10: Glass rod
11: Holes
20: Glass tube
30: Optical fiber
31: Vacancy
32: Optical transmission glass
33: Hollow glass fiber
34: Plate glass

BEST MODE FOR CARRYING OUT THE INVENTION

The air cladding-type optical fiber of the present invention preferably has a nonlinear coefficient ($\gamma$) of at least 470 $W^{-1}km^{-1}$ to light with a wavelength of 1,550 nm. If the nonlinear coefficient is less than 470 $W^{-1}km^{-1}$, when it is attempted to increase the nonlinearity, the fiber length tends to be long and the fiber tends to be susceptible to an influence of the temperature change or external turbulence such as vibration. The nonlinear coefficient is more preferably at least 625 $W^{-1}km^{-1}$.

Further, the absolute value (D) of group velocity dispersion to the same light is preferably at most 50 ps/nm/km. If it exceeds 50 ps/nm/km, the wavelength zone satisfying the phase matching condition is likely to be small. It is more preferably at most 10 ps/nm/km.

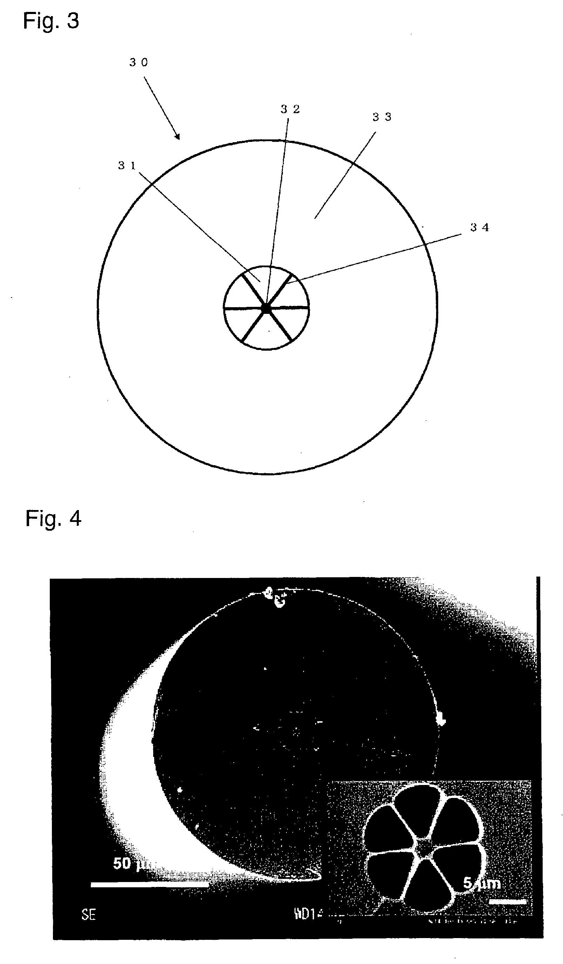

Fig. 3 is a schematic view of a cross section of an example of an air cladding-type optical fiber.

The air cladding-type optical fiber 30 shown in Fig. 3 comprises six vacancies 31, an optical transmission glass 32, a hollow glass fiber 33 and plate glasses 34.

The hollow portion of the hollow glass fiber 33 is composed of six vacancies 31 extending in its axial direction (a direction perpendicular to the sheet), and adjacent vacancies 31 are partitioned by a plate glass 34 present between them.

The number of vacancies 31 is not limited to 6, but is preferably at least 3. If the number is 2, confinement of light in the air cladding-type optical fiber tends to be inadequate. On the other hand, the number is preferably at most 12, more preferably at most 9.

The optical transmission glass 32 may be one made of a single type of glass or one made of at least two types of glass with their boundaries concentric in its cross section.

In the former case, the optical transmission glass 32 is the core of the optical fiber 30 itself.

An example of the latter case may, for example, be one having a portion with a higher refractive index at its center, such as one wherein the optical transmission glass 32 comprises an inner high refractive index glass and a low refractive index glass surrounding it. By making the optical transmission glass 32 to have such a structure, it becomes possible to adjust the above-mentioned $\gamma$ or D or to prevent or suppress an increase of the connection loss or disappearance of the waveguide structure at the time of fusing and connecting such an optical fiber with a quartz fiber.

The hollow glass fiber 33 is one wherein the optical transmission glass 32 is held via plate glasses 34 at the center of the hollow portion formed by the vacancies 31, and it is not expected that light transmits in the glass of the hollow glass fiber.

The plate glasses 34 are designed to hold the optical transmission glass at the center of the hollow portion, and their thickness is preferably from 0.05 to 1.5 $\mu$m. If the thicknesses is less than 0.05 $\mu$m, when the optical fiber 30 is cut, the plate glasses 34 are likely to be broken and become incapable of holding the optical transmission glass 32. Typically, the thickness is at least 0.1 $\mu$m. On the other hand, if the thickness exceeds 1.5 $\mu$m, leakage of light from the optical transmission glass 32 to the plate glasses 34 tends to be substantial, whereby confinement of light tends to be inadequate. It is preferably at most 0.5 $\mu$m.

A vacancy 31 is defined by the optical transmission glass 32, the hollow glass fiber 33 and the plate glass 34. Here, at least a portion of the optical transmission glass 32 in contact with the vacancy 31, a portion of the hollow glass fiber 33 in contact with the vacancy 31, and the plate glass 34 are made of glass having the same composition.

The plate glass 34 is preferably glass consisting essentially of, as represented by mol% based on the following oxides, from 40 to 75% of $Bi_2O_3$, from 12 to 45% of $B_2O_3$, from 1 to 20% of $Ga_2O_3$, from 1 to 20% of $In_2O_3$, from 0 to 20% of ZnO, from 0 to 15% of BaO, from 0 to 15% of $SiO_2+Al_2O_3+GeO_2$, from 0 to 15% of MgO+CaO+SrO, from 0 to 10% of $SnO_2+TeO_2+TiO_2+ZrO_2+Ta_2O_5+Y_2O_3+WO_3$ and from 0 to 5% of $CeO_2$, provided that $Ga_2O_3+In_2O_3+ZnO$ is at

least 5%. The same applies to the optical transmission glass 32. Further, in the above glass, $Bi_2O_3$ is typically from 45 to 75%.

If the optical transmission glass 32 is not such glass, it tends to be difficult to increase γ and reduce D.

The diameter (d) of an inscribed circle in cross section of the optical transmission glass 32 is usually from 0.2 to 10 μm, typically from 0.5 to 4 μm.

The diameter (d') of a circumscribed circle in cross section of the hollow portion of the hollow glass fiber 33 is preferably at least $(1+2^{1/2})$d. If it is less than $(1+2^{1/2})$d, confinement of light tends to be inadequate, and the transmission loss tends to be large. It is more preferably at least 3d, particularly preferably at least 4d. On the other hand, d' is preferably at most 16d. If it exceeds 16d, there will be a problem such that the strength of the optical fiber 30 decreases, a foreign matter is likely to enter into the vacancies 31, or the plate glasses 34 are likely to be broken when it is attempted to cut the optical fiber 30.

The outer diameter of the hollow glass fiber 33 is preferably 125±2 μm, when the optical fiber 30 is fusion-bonded to a quartz optical fiber (SMF) standardized by ITU-T recommendation G.652.

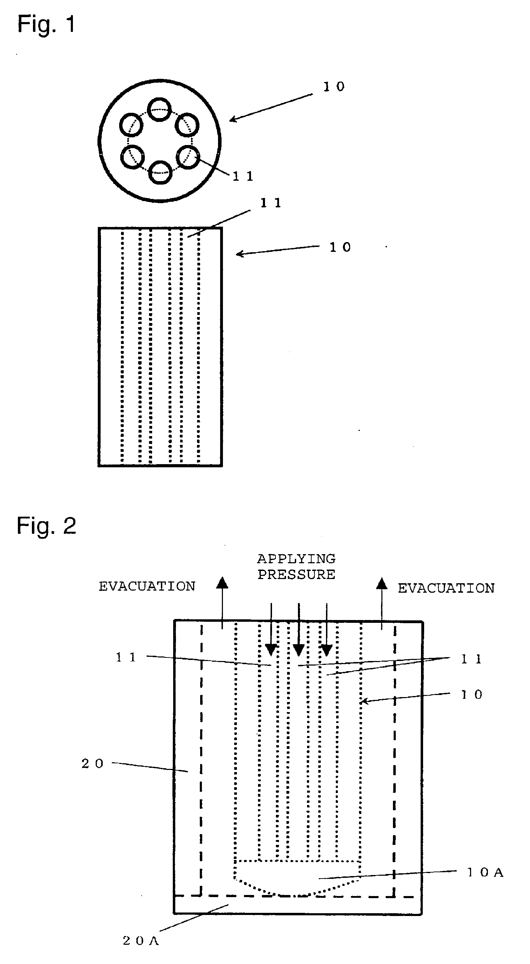

Now, the present invention will be described with reference to Figs. 1 and 2, but it should be understood that the present invention is by no means thereby restricted.

Fig. 1 is a plan view and side view of a glass rod 10 having six holes 11 with an equal diameter provided around its center axis to extend in its axial direction so that the distance between each hole and the axis is equal and the distance between axes of adjacent holes is equal, and a portion surrounded by such holes will be a portion to constitute the optical transmission glass 32.

Here, in the plan view, a circle having the above central axis as its center is represented by a dotted line, and on such a circle, the respective axes of the six holes 11 are disposed with an equal distance.

The glass rod 10 is prepared by e.g. heating and drawing a glass rod having a predetermined number of holes formed to pass through in the axial direction by means of e.g. an ultrasonic wave processing machine.

Fig. 2 is a schematic view illustrating a step of heating and drawing the glass rod 10 while applying pressure to expand the six holes 11 with one end of the glass rod 10 closed.

The glass rod 10 having one end closed by a sealing portion 10A is put into a glass tube 20 with its sealing portion 10A located downwards, and then, the lower end of the glass tube 20 is sealed by a sealing portion 20A.

Then, the space between the glass rod 10 and the glass tube 20 is evacuated, and the glass tube 20 is heated and drawn by applying pressure to holes 11 for expansion, so that the glass rod 10 and the glass tube 20 are fusion-bonded to form a glass rod 10-1 (not shown). This method for production of the glass rod 10-1 may be regarded as one type of rod-in-tube method, but is different from a usual rod-in-tube method in that the holes 11 are expanded under pressure.

In a cross section of the glass rod 10-1, a trace of the outer circumference of the heat-drawn glass rod 10 is observed. The area scale ratio α i.e. the square of the ratio of the diameter of such an outer circumference trace to the diameter of the glass rod 10 before being heat drawn, is less than 1. In the present invention, "the holes 11 are expanded under pressure" means that β obtainable by dividing the scale ratio of the area of a hole 11 in the cross-sectional direction of the glass rod by such α, is larger than 1.

The heat drawing of the glass tube 20 is typically carried out at a temperature where the glass viscosity becomes from $10^{4.5}$ to $10^{9.5}$ poise.

The pressure for pressurizing holes 11 should properly be selected, and it is typically from 1 to 100 kPa. Further, the pressure during the heat drawing may not necessarily be constant and may properly be changed taking into consideration the influence of the heat capacity of the non-stretched portion of the glass rod 10 which is gradually reduced during the drawing, over the viscosity of the glass.

The evacuation of the space between the glass rod 10 and the glass tube 20 is preferably carried out at a level of -100 to -1 kPa. If it is less than -100 kPa, the glass rod 10-1 may be deformed, whereby the optical waveguide may get distorted or decentered. If it exceeds -1 kPa, fusion-bonding of the glass rod 10 and the glass tube 20 may tend to be difficult. Typically, it is at most -10 kPa.

In a case where the diameter of an inscribed circle in cross section of the portion to constitute the optical transmission glass 32 of the glass rod 10-1 has not yet reached the desired value, or in a case where the glass present between circumferentially adjacent holes has not yet become a plate-form having a desired thickness, the above-described method for producing the glass rod 10-1 is applied to the glass rod 10-1 to form a glass rod 10-2, and if a desired preform is still not yet obtained, this process is repeated.

The desired preform should be determined by the shape, size, etc. of an optical fiber to be produced by subjecting it to wire drawing. In a case where the diameter of the optical fiber is 125 μm, d is from 0.2 to 10 μm, and the thickness of the plate glass is from 0.05 to 1.5 μm, it is preferred that when the outer diameter of the preform is $D_p$, the above-mentioned diameter of an inscribed circle in cross section is from 0.0016 Dp to 0.08 Dp, the glass present between circumferentially adjacent holes is in a plate-form and its thickness is from 0.0004 Dp to 0.012 $D_p$. Here, Dp is typically from 1 to 30 mm.

The preform thus obtained, is usually subjected to wire drawing as follows, to form an optical fiber.

Firstly, the preform is subjected to etching and cleaning for the purpose of improving reliability in strength of the optical fiber.

Etching is preferably carried out so that it extends to at least 1 $\mu$m from the glass surface. If it is less than 1 $\mu$m, it is difficult to remove scratches formed during the preparation of the preform. More preferably, it is at least 2 $\mu$m.

When etching or cleaning is to be carried out, it is preferred to seal both ends of the preform in order to prevent an etching liquid or a cleaning liquid from entering into holes of the preform.

Such sealing may be carried out, for example, by a method of preparing a spherically tailing fiber. Namely, while rotating the preform, its end surface is brought to be close to a burner and melted, so that the end surface is rounded by the surface tension.

After the etching, the preform is immediately rinsed with pure water and dried.

After the drying, the sealing at one end of the preform is detached, and the preform is mounted on a wire drawing jig with the end surface having the sealing detached located upward, followed by wire drawing.

At the time of carrying out the wire drawing, in order to prevent collapse of holes of the preform by the influence of the surface tension, there may be a case where it is preferred to apply pressure to holes of the preform depending upon the size of the holes.

Namely, when the cross section s of the holes of the preform exceeds 1 mm$^2$, it is not necessary to apply pressure, but pressure may be applied. In the case of applying pressure, the pressure $P_f$ is preferably at most 10 kPa. If the pressure exceeds 10 kPa, there may possibly be a trouble such that during the wire drawing, the wire diameter of the fiber tends to be irregular, or the holes tend to be expanded too much.

When s is 0.2 mm$^2$<s<1 mm$^2$, no application of pressure is required, but it is preferred to apply pressure in a case where it is desired to precisely prepare the fiber structure as designed. In the case of applying pressure, $P_f$ is preferably at most 60 kPa. If it exceeds 60 kPa, there may be possibly be a trouble such that during the wire drawing, the wire diameter of the fiber tends to be irregular, or the holes tend to be expanded too much. It is preferably at most 20 kPa, more preferably at most 10 kPa.

When s is 0.2 mm$^2$ or less, it is preferred or essential to apply pressure. $P_f$ is preferably from 1 to 60 kPa. If it is less than 1 kPa, the holes may get collapsed. If it exceeds 60 kPa, there may possibly be such a trouble that during the wire drawing, the wire diameter of the fiber tends to be irregular, or the holes tend to be expanded too much. It is more preferably at most 20 kPa, more preferably at most 10 kPa.

The wire drawing rate should properly be determined depending upon the heating temperature of the wire drawing furnace, the other diameter of the preform, the matrix material feeding rate of the preform, the outer diameter of the optical fiber after the wire drawing, etc. It is usually from 3 to 30 m/min. If it is less than 3 m/min, the matrix material feeding rate tends to be slow, whereby the period of time where the preform is held at a high temperature, tends to be long, and the glass tends to be crystallized. If it exceeds 30 m/min, the period of time where the preform is held at a high temperature tends to be short, whereby the viscosity of the glass tends to be large, and wire breakage may result during the wire drawing.

EXAMPLES

EXAMPLE 1

In order to obtain glass of a composition comprising, as represented by mol%, 53.23% of $Bi_2O_3$, 27.61% of $B_2O_3$, 8.96% of $Ga_2O_3$, 1% of $In_2O_3$, 4.48% of ZnO, 4.23% of BaO and 0.5% of $CeO_2$, materials were blended and mixed to prepare 250 g of a blend material. This blend material was put into a platinum crucible and held and melted at 1,000°C for 2 hours in the atmosphere. The obtained molten glass was cast in a plate form, then held at 370°C for 4 hours and then cooled to room temperature for annealing.

From the glass thus obtained, a glass plate having a thickness of 1 mm and a size of 20 mm x 20 mm was prepared, and both sides were mirror-polished to obtain a sample plate. With respect to the sample plate, the refractive index to light with a wavelength of 1,550 nm was measured by means of Model 2010 prism coupler manufactured by Metricon Corporation and found to be 2.111.

Further, a right triangle prism having a hypotenuse of 40 mm, a short side of 20 mm, an angle of 60° between the hypotenuse and the short side and a thickness of 10 mm, was prepared from the above glass, and the hypotenuse and the long side were mirror-polished to obtain a sample block. With respect to such a sample block, the material dispersion Dm (unit: ps/nm/km) of glass was calculated as follows. Namely, the refractive index $n_\lambda$ of the sample block at a wavelength ($\lambda$) of from 492 to 1,710 nm, was obtained by a minimum deviation method by means of a precision refractive index measuring apparatus, manufactured by Kalnew. This $n_\lambda$ was fit into the Sellmeier's polynomial of the formula (1) to determine fitting parameters $p_1$, $p_2$, $p_3$ and $p_4$.

$$n_\lambda{}^2 = p_1 + p_2 \cdot \lambda^2 / (\lambda^2 - p_3) + p_4 \cdot \lambda^2 \qquad (1)$$

Using $n_\lambda$ represented by the formula (1), $D_m$ was calculated from the formula (2) and found to be -170 ps/nm/km.

$$D_m = -10^{15} (\lambda / c) \cdot d^2 n_\lambda / d\lambda^2 \qquad (2)$$

Molten glass obtained in the same manner as described above was cast in a tea caddy-form mold (a cylindrical mold having a bottom face) made of SUS310S and having an inner diameter of 28 mm and a height of 120 mm, followed by annealing to obtain a glass rod.

In this glass rod, six through-holes having an inner diameter of 4 mm were formed by means of an ultrasonic processing machine USM-3CNC, manufactured by PROSONIC Inc. Here, the center axes of these six holes were apart by 5 mm from the center axis of the glass rod, and the distance between the adjacent holes was adjusted to be 1 mm.

Then, this glass rod having six holes formed was redrawn i.e. heat-drawn at 444°C to obtain a rod glass having a diameter of 7.5 mm, which was divided into four to obtain rod glass having a length of 130 mm.

This rod glass was redrawn at 418°C to obtain a glass rod having a diameter of 4.7 mm.

On the other hand, four glass rods made of the same glass as this rod glass and having an outer diameter of 15 mm and a height of 130 mm, were prepared, and at the center of each glass rod, a hole having a diameter of 6 mm was formed by means of the above-mentioned ultrasonic processing machine, to prepare four glass tubes.

Then, one end of the above-mentioned glass rod having a diameter of 4.7 mm was sealed, and the glass rod was put into the above glass tube having an outer diameter of 15 mm with its sealed portion down, and the lower end of the glass tube was sealed.

The space between the glass rod and the glass tube was evacuated to -60 kPa, and they were heated to 425°C while applying pressure of 50 kPa to the six holes of the glass rod to expand them, so that the glass rod and the glass tube were simultaneously redrawn to obtain a preform having a diameter of 5 mm. Here, the above-mentioned $\beta$ at that time was 3.8.

This preform was subjected to wire drawing under conditions of a wire drawing temperature of 425°C and a wire drawing rate of 6 mm/min without applying pressure to the holes to obtain an optical fiber 1 having the above d being 3.6 $\mu$m, the above d' being 35.8 $\mu$m, the hollow glass fiber outer diameter i.e. the fiber diameter being 125 $\mu$m and the thickness of the above plate glass being 0.35 $\mu$m.

The group velocity dispersion GVD to light with a wavelength of 1,550 nm of the optical fiber 1 was measured by a homodyne interference method by means of 81910A, manufactured by Agilent and found to be -70±20 ps/nm/km.

EXAMPLE 2

As glass, the same glass as in Example 1 was used, and an optical fiber 2 was prepared as follows.

Namely, a rod glass having six holes formed and having a diameter of 7.5 mm and a length of 130 mm, as obtained in Example 1, was redrawn at 418°C to obtain a glass rod having a diameter of 3.5 mm.

Then, one end of this glass rod was sealed and with its sealed portion down, the glass rod was put into the same glass tube as used in Example 1 having an outer diameter of 15 mm and an inner diameter of 6 mm. Then, the lower end of the glass tube was sealed.

The space between the glass rod and the glass tube was evacuated to -60 kPa, and the glass rod and the glass tube were heated to 425°C while applying a pressure of from 30 to 40 kPa to the six holes of the glass rod to expand them, so that the glass rod and the glass tube were simultaneously redrawn to obtain a preform having a diameter of 5 mm. Here, $\beta$ at that time was 3.9.

This preform was subjected to wire drawing under conditions of a wire drawing temperature of 425°C and a wire drawing rate of 6 mm/min while applying a pressure of 5 kPa to the holes to obtain an optical fiber 2 having the above d being 2.8 $\mu$m, the above d' being 17.3 $\mu$m, the fiber diameter being 125 $\mu$m, and the thickness of the above plate glass being 0.25 $\mu$m.

In Fig. 4, a scanning electron microscopic (SEM) photograph of the cross section of the optical fiber 2 is shown. The inserted photograph is an enlarged photograph of the hollow portion.

GVD of the optical fiber 2 was measured in the same manner as in Example 1 and found to be -10±20 ps/nm/km.

Further, with respect to the optical fiber 2, $\gamma$ was measured by four-wave-mixing as follows. Namely, the optical fiber 2 having a length of 1 m was prepared, and using light with a wavelength of 1,550 nm as a pump light, signal lights having wavelengths departed from the pump light wavelength every 0.5 nm i.e. 1,549.5 nm, 1,549 nm and 1,548.5 nm, were simultaneously permitted to enter the optical fiber 2 through a coupler, and their outputs were observed by an optical spectrum analyzer, and the ratio r of the idler light and the signal light at that time was calculated.

From r thus obtained and the formula (3), $\gamma$ was calculated and found to be $700 \pm 90$ W$^{-1}$km$^{-1}$. Here, in the formula (3), P is the average pump power passing through the optical fiber, and z is the length of the optical fiber.

$$r = (\gamma \times P \times z)^2 \qquad\qquad (3)$$

EXAMPLE 3

As glass, the same glass as in Example 1 was used, and an optical fiber 3 was prepared as follows.

Namely, a rod glass having six holes formed and having a diameter of 7.5 mm and a length of 130 mm, as obtained in Example 1, was redrawn at 418°C to obtain a glass rod having a diameter of 3.1 mm.

On the other hand, a glass rod made of the same glass and having an outer diameter of 15 mm and a height of 130 mm was prepared, and at the center of this glass rod, a hole having a diameter of 4 mm was formed by means of the above ultrasonic wave processing machine to obtain a glass tube.

Then, one end of the above-mentioned glass rod having a diameter of 3.1 mm was sealed, and with its sealed portion down, the glass rod was put into the above glass tube having an outer diameter of 15 mm and an inner diameter of 4 mm, and then, the lower end of the glass tube was sealed.

The space between the glass rod and the glass tube was evacuated to -60 kPa, and the glass rod and the glass tube were heated to 425°C while applying a pressure of from 30 to 40 kPa to the six holes of the glass rod to expand them, so that the glass rod and the glass tube was simultaneously redrawn to obtain a primary preform having a diameter of 3 mm. Here, $\beta$ at that time was 3.7.

One end of this primary preform was sealed, and with the sealed portion down, the primary preform was put into a glass tube having an outer diameter of 15 mm and an inner diameter of 4 mm, and then, the lower end of the glass tube was sealed.

The space between the primary preform and the glass tube was evacuated to -60 kPa, the primary preform and the glass tube were heated to 425°C while applying a pressure of from 20 to 30 kPa to the six holes of the primary preform to expand them, so that the glass rod and the glass tube were simultaneously redrawn to obtain a preform having a diameter of 5 mm. Here, $\beta$ at that time was 3.0.

This preform was subjected to wire drawing under conditions of a wire drawing temperature of 425°C and a wire drawing rate of 6 mm/min while applying a pressure of 3 kPa to the holes, to obtain an optical fiber 3 having the above d being 2.1 $\mu$m, the above d' being 11 $\mu$m, the fiber diameter being 125 $\mu$m and the thickness of the above plate glass being 0.2 $\mu$m.

GVD of the optical fiber 3 was measured in the same manner as in Example 1 and found to be $-70 \pm 20$ ps/nm/km.

Further, $\gamma$ of the optical fiber 3 was measured in the same manner as in Example 2 and found to be $1,050 \pm 150$ W$^{-1}$km$^{-1}$.

INDUSTRIAL APPLICABILITY

The present invention is useful for the production of an optical fiber having large $\gamma$ and small D.

The entire disclosure of Japanese Patent Application No. 2006-137914 filed on May 17, 2006 including specification, claims, drawings and summary is incorporated herein by reference in its entirety.

**Claims**

1. A process for producing an optical fiber comprising a hollow glass fiber with an optical transmission glass which is extended in its axial direction at its center, which process comprises a step of heating and drawing a glass rod having three or more holes with an equal diameter provided around its center axis to extend in its axial direction where the distance between each hole and the axis is mutually equal and the distance between adjacent holes is mutually equal, and a portion surrounded by such holes will constitute said optical transmission glass, while applying pressure to expand the holes with one end of the rod closed, to form a preform wherein glass between the holes is in a plate form, and subjecting the preform to wire drawing to form an optical fiber in which said optical transmission glass is held by plate glass.

2. The process for producing an optical fiber according to Claim 1, wherein when the glass rod is formed into the preform, a rod-in-tube method is used in the above step or a step other than the above step.

3. The process for producing an optical fiber according to Claim 1 or 2, wherein the diameter of an inscribed circle in cross section of the optical transmission glass is from 0.2 to 10 $\mu$m.

4. The process for producing an optical fiber according to Claim 1, 2 or 3, wherein the diameter of a circumscribed circle in cross section of the hollow portion of the hollow glass fiber is at least $(1+2^{1/2})$ times larger than the diameter of an inscribed circle in cross section of the optical transmission glass.

5. The process for producing an optical fiber according to Claim 1, 2, 3 or 4, wherein the thickness of each plate glass holding the optical transmission glass is at most 1.5 mm.

6. The process for producing an optical fiber according to any one of Claims 1 to 5, wherein the optical transmission glass has a portion having a higher refractive index at its center.

7. The process for producing an optical fiber according to any one of Claims 1 to 6, wherein the optical transmission glass consists essentially of, as represented by mol% based on the following oxides, from 40 to 75% of $Bi_2O_3$, from 12 to 45% of $B_2O_3$, from 1 to 20% of $Ga_2O_3$, from 1 to 20% of $In_2O_3$, from 0 to 20% of ZnO, from 0 to 15% of BaO, from 0 to 15% of $SiO_2+Al_2O_3+GeO_2$, from 0 to 15% of MgO+CaO+SrO, from 0 to 10% of $SnO_2+TeO_2+TiO_2+ZrO_2+Ta_2O_5+Y_2O_3+WO_3$ and from 0 to 5% of $CeO_2$, provided that $Ga_2O_3+In_2O_3+ZnO$ is at least 5%.

8. The process for producing an optical fiber according to any one of Claims 1 to 7, wherein the optical fiber has a nonlinear coefficient of at least 470 $W^{-1}km^{-1}$ to light with a wavelength of 1,550 nm and an absolute value of group velocity dispersion of at most 50 ps/nm/km to the same light.

## Fig. 1

## Fig. 2

APPLYING
PRESSURE

EVACUATION          EVACUATION

Fig. 3

Fig. 4

## INTERNATIONAL SEARCH REPORT

| International application No. |
| --- |
| PCT/JP2007/059694 |

A. CLASSIFICATION OF SUBJECT MATTER
*C03B37/027*(2006.01)i, *C03B37/012*(2006.01)i, *C03C13/04*(2006.01)i, *G02B6/00* (2006.01)i, *G02B6/032*(2006.01)i

According to International Patent Classification (IPC) or to both national classification and IPC

B. FIELDS SEARCHED

Minimum documentation searched (classification system followed by classification symbols)
C03B37/027, C03B37/012, C03C13/04, G02B6/00, G02B6/032

Documentation searched other than minimum documentation to the extent that such documents are included in the fields searched
Jitsuyo Shinan Koho 1922-1996 Jitsuyo Shinan Toroku Koho 1996-2007
Kokai Jitsuyo Shinan Koho 1971-2007 Toroku Jitsuyo Shinan Koho 1994-2007

Electronic data base consulted during the international search (name of data base and, where practicable, search terms used)
STN(CAPlus)

C. DOCUMENTS CONSIDERED TO BE RELEVANT

| Category* | Citation of document, with indication, where appropriate, of the relevant passages | Relevant to claim No. |
| --- | --- | --- |
| A | H.Ebendorff-Heidepriem et al., Bismuth glass holey fibers with high nonlinearity, Optics Express, VOL.12, NO.21, 2004 | 1-8 |
| A | P.Petropoulos et al., Soliton-self-frequency-shift effects and pulse compression in an anomalously dispersive high nonlinearity lead silicate holey fiber, Trends in Optics and Photonics 86, PD3/1-PD3/3, 2003 | 1-8 |
| A | P.Petropoulos et al., A spliced and connectorized highly nonlinear and anomalously dispersive bismuth-oxide glass holey fiber, Lasers and Electro-Optics, 2004. (CLEO). Conference , vol.1 , 2004, P.2 | 1-8 |

| ☒ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 23 July, 2007 (23.07.07) | 31 July, 2007 (31.07.07) |

| Name and mailing address of the ISA/ | Authorized officer |
| --- | --- |
| Japanese Patent Office | |
| Facsimile No. | Telephone No. |

Form PCT/ISA/210 (second sheet) (April 2005)

## INTERNATIONAL SEARCH REPORT

| | International application No. |
| --- | --- |
| | PCT/JP2007/059694 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | X.Feng et al., Extruded singlemode, high-nonlinearity, tellurite glass holey fibre, Electronics Letters, vol.41 no.15, 2005, p.835 - 837 | 1-8 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006137914 A